# EUROPÄISCHE PATENTSCHRIFT

(11) **EP 0 433 750 B1**
(45) Veröffentlichungstag und Bekanntmachung des Hinweises auf die Patenterteilung: **01.12.1993**
(21) Anmeldenummer: 90123172.0
(22) Anmeldetag: 04.12.1990
(51) Int. Cl.: C01G 37/033, C22B 34/32

(54) **Verfahren zur Herstellung von Chromsäure**
Process for the preparation of chromic acid
Procédé de préparation d'acide chromique

(30) Priorität: 16.12.1989 DE 3941569
(43) Veröffentlichungstag der Anmeldung: 26.06.1991
(73) Patentinhaber: BAYER AG, 51368 Leverkusen (DE)
(72) Erfinder: Lönhoff, Norbert, Dr., W-5090 Leverkusen 1 (DE); Schmidt, Ludwig, Dr., W-4150 Krefeld (DE); Block, Hans-Dieter, Dr., W-5090 Leverkusen 3 (DE); Weber, Rainer, Dr., W-5090 Leverkusen 1 (DE)

(56) Entgegenhaltungen:
- DE-C- 371 222
- FR-A- 2 219 806
- GB-A- 2 081 696
- JP-A-62 047 436

## Beschreibung

Die Erfindung betrifft ein Verfahren zur elektrolytischen Herstellung von Chromsäure.

Gemäß "Ullmann's Encyclopedia of Industrial Chemistry, Fifth Edition, Vol. A 7, VCH Verlagsgesellschaft mbH, Weinheim 1986, S. 67-81" erfolgt die technische Herstellung von Chromsäure nach drei unterschiedlichen Verfahren. Bei der Herstellung von Natriumdichromat wird Chromerz mit Soda und/oder Natriumhydroxid und Luftsauerstoff aufgeschlossen. Der den Aufschlußofen verlassende Klinker wird mit Wasser und/oder chromhaltiger Lösung gelaugt. Nach Einstellung des pH-Wertes der Maische auf 7 bis 9,5 mit Schwefelsäure und/oder Natriumdichromatlösung wird die entstandene Natriummonochromatlösung durch Filtration von unlöslichen Chromerzbestandteilen befreit. Der dabei anfallende chromathaltige Rückstand muß einer aufwendigen Rückstandsbehandlung zugeführt werden.

Zur Herstellung von Natriumdichromat werden die Chromationen der Lösung durch Ansäuerung mit Schwefelsäure und/oder durch Ansäuerung mit Kohlendioxid unter Druck in Dichromationen umgewandelt. Dabei entsteht als Zwangsanfallprodukt chromathaltiges Natriumsulfat, das einer Aufarbeitung zugeführt werden muß.

Zur Herstellung von Chromsäure nach dem sogenannten Naßverfahren wird die Natriumdichromatlösung aufkonzentriert und mit Schwefelsäure versetzt, wobei Chromsäure auskristallisiert.

Beim sogenannten Schmelzverfahren werden Natriumdichromat-Kristalle mit konzentrierter Schwefelsäure im Molverhältnis von annähernd 1:2 bei Temperaturen von ca. 200°C umgesetzt. Beiden Verfahren gemeinsam ist der Zwangsanfall an mit Chromat verunreinigtem Natriumbisulfat als Schmelze bzw. als wäßrige Lösung.

Diesen Nachteil vermeiden das dritte Verfahren, die Elektrolyse von Natriumdichromat in wäßriger Lösung, wie es beispielsweise in der DE-C3 020 260 oder der CA-A 739 447 beschrieben ist.

Es wurde nun ein Verfahren zur Herstellung von Chromsäure gefunden, das die u.a. in der Verwendung von Natriumdichromat liegenden Nachteile der genannten Verfahren nicht aufweist.

JP-A-62 047 436 offenbart ein Verfahren zur Herstellung von metallischem Chrom durch Elektrolyse von in Schwefelsäure gelöstem Chromhydroxid, das aus Ferrochrom über Ammoniumchromalaun gewonnen wurde.

Gegenstand der Erfindung ist ein Verfahren zur Erzeugung von Chromsäure durch Elektrolyse von in Säure gelöstem, aus Ferrochrom über Ammoniumchromalaun gewonnenem Chromhydroxid, wobei
a) Ferrochrom in Schwefelsäure und Mutterlauge aus der Ammoniumchromalaunkristallisation, gegebenenfalls unter Zusatz von Katholyt- und/oder Anolyt-Überlauf aus der Elektrolyse, gelöst wird,
b) ungelöste Bestandteile durch Filtration entfernt werden,
c) gelöstes Eisen durch Zusatz von Ammoniak und/oder Ammoniumsulfat zum erhaltenen Filtrat, Kristallisation von Eisenammoniumsulfat und Filtration, entfernt wird,
d) Ammoniumchromalaun aus der verbleibenden Lösung kristallisiert und filtriert wird und das Filtrat zum Lösen von Ferrochrom zurückgeführt wird,
e) das Ammoniumchromalaun in Wasser gelöst wird,
f) Chrom(III)hydroxid aus der entstandenen Lösung mittels Base, gegebenenfalls unter reduzierenden Bedingungen gefällt und abgetrennt wird,
g) das Chromhydroxid in Säure gelöst wird,
h) ungelöste Anteile aus der Lösung abgetrennt werden, und
i) das in Säure gelöste Chromhydroxid in durch Membranen in Anodenraum und Kathodenraum geteilte Elektrolysezellen eingeleitet wird, wobei im Anodenraum Chromsäure erzeugt und im Kathodenraum Wasserstoff und Chrommetall abgeschieden und/oder Chrom(II)-Ionen erzeugt werden,

das dadurch gekennzeichnet ist, daß
in Stufe g) entweder eine einheitliche Lösung des Chromhydroxids in Chromsäure erzeugt wird, oder zwei getrennte Lösungen, davon eine in Chromsäure und eine in Schwefelsäure erzeugt werden, wobei die Lösung in Chromsäure als Anolyt und entweder dieselbe Lösung oder die Lösung in Schwefelsäure des Katholyt eingesetzt werden.

Geeignete Bedingungen für die kathodische Abscheidung von elementarem Chrom sind beispielsweise in "J.B. Rosenbaum, R.R. Lloyd, C.C. Merrill: Electrowinning Chromium Metal, US. Bur. of Mines Report of Investigation 5322, US Dep. of the Interior, 1957" beschrieben. Dazu ist eine Erhöhung des pH-Wertes, z.B. durch Zugabe von Ammoniak, nötig. Bei niedrigeren pH-Werten erfolgt kathodisch vorzugsweise eine Reduktion zu Chrom(II)-Ionen.

Vorzugsweise wird ein kohlenstoffhaltiges Ferrochrom, also high carbon Ferrochrom oder charge grade Ferrochrom, als Ausgangsmaterial herangezogen; solche mit einem hohen Chrom:Eisen-Verhältnis sind besonders günstig.

Die Fällung des Chrom(III)hydroxids wird durch Anheben des pH-Wertes der Ammoniumchromalaunlösung auf ca. 3 bis 6 vermittels Zugabe von Basen bewirkt. Geeignete Basen sind Ammoniak, Alkalimetalhydroxide, Alkalimetallsalze schwacher oder mittelstarker Säuren, oder Erdalkalimetalloxide, -hydroxide und -carbonate. Bevorzugt sind Ammoniak, Natriumhydroxid, Natriumcarbonat und ihre wäßrigen Lösungen. Vorzugsweise wird die Fällung des Chrom(III)hydroxids bei erhöhter Temperatur vorgenommen. Seine Abtrennung erfolgt durch Filtrieren oder Zentrifugieren, dabei ist eine weitgehende Entfernung der anhaftenden Mutterlauge anzustreben.

Bei der vorteilhaften Variante des erfindungsgemäßen Verfahrens wird die Fällung von Chrom(III)hydroxid unter reduzierenden Bedingungen und unter Ausschluß von Luftsauerstoff durchgeführt. Geeignete Reduktionsmittel sind Schwefeldioxid, schweflige Säure sowie deren Salze, Chrom(II)-Salze, Hydrazin, Hydroxylamin sowie auch elektrischer Strom, z.B. an Kohlepartikel-Schüttkathoden.

Vorzugsweise erfolgt die Fällung von Chromhydroxid in zwei Schritten, wobei im ersten Schritt ein verunreinigtes Chromhydroxid gefällt wird, das nach Abtrennung dem Lösen von Ferrochrom zugeführt wird und nur im zweiten Schritt gefälltes und abgetrenntes, gegebenenfalls gewaschenes, Chromhydroxid mit Schwefelsäure- und/oder Chromsäure-haltiger Lösung aufgelöst und zur elektrolytischen Erzeugung von Chromsäure und Chrommetall verwendet wird.

Noch weiter läßt sich der Gehalt an Verunreinigungen im Chrom(III)hydroxid durch Waschen mit Wasser oder wäßrigen Lösungen herabsetzen.

Gewünschtenfalls kann das Chromhydroxid zur weiteren Reinigung nochmals umgefällt werden, indem es in Säure gelöst und erneut durch Anheben des pH-Wertes gefällt wird. Für noch höhere Reinheit können aus der sauren Lösung die Verunreinigungen, insbesondere Eisen, nach bekannten Verfahren beispielsweise mit Phosphaten oder Phosphonaten extrahiert werden.

Auf diese Weise erhältliches Chromhydroxid ist auch zur Herstellung von Chrom(III)-Salzen, wie Chrom(III)-acetat, -nitrat, -sulfat und -formiat sowie zur Herstellung von Chromgerbstoffen geeignet.

Das abgetrennte Chromhydroxid wird nunmehr gänzlich oder zum Teil in Chromsäure gelöst, wozu die aus den Anodenabteilen der Elektrolysezellen stammende Chromsäure-Lösung zur Gänze oder zum Teil verwendet wird.

Mit dieser von unlöslichen Anteilen abgetrennten Lösung des Chromhydroxids in Chromsäure werden die Anodenabteile der Elektrolysezellen beschickt zwecks teilweiser oder nahezu vollständiger Umwandlung des enthaltenen Chrom(III) in Chromsäure. Ist das abgetrennte Chromhydroxid gänzlich in Chromsäure aufgelöst worden, dann wird diese Lösung auch den Kathodenabteilen der Elektrolysezellen zugeführt. Zur Verbesserung der Stromausbeute bei der Abscheidung von metallischem Chrom kann dabei mit Vorteil eine chemische Reduktion des in der Lösung enthaltenen Chrom(VI) mittels Schwefeldioxid bei gleichzeitiger Schwefelsäure-Zugabe vorgeschaltet werden. Insgesamt vorteilhafter ist es jedoch, den zur Beschickung der Kathodenabteile vorgesehenen Anteil des Chromhydroxids sogleich in Schwefelsäure zu lösen, so daß eine Reduktion nicht mehr notwendig ist, und die von unlöslichen Anteilen abgetrennte Lösung den Kathodenräumen zuzuführen.

Die schwefelsaure Chrom(III)-sulfatlösung kann, um den Gehalt an Verunreinigungen weiter herabzusetzen, nach bekannten Methoden gereinigt werden, beispielsweise durch Extraktion der Verunreinigungen mit sauren Phosphorsäureestern oder sauren Phosphaten oder sauren Phosphonaten.

Die Elektrolyse kann alternativ so betrieben werden, daß die Kathodenabteile mit Ammoniumchromalaunlösung und die Anodenabteile mit der Lösung von Chromhydroxid beschickt werden.

Ein Überlauf der Kathodenräume wird, gegebenenfalls nach Reduktion noch vorhandener, zu Oxidationen befähigter Anteile mit beispielsweise Schwefeldioxid, zurückgeführt in die durch Auflösen von Ferrochrom in Schwefelsäure entstandene Lösung, gewünschtenfalls auch teilweise in die durch Auflösen des Chromhydroxids in Säure entstandene Chrom(III)-Salz-Lösung in Chromsäure oder Schwefelsäure für die Beschickung der Kathodenräume.

Wird die Elektrolyse so betrieben, daß im Katholytkreislauf Chrom(II)-Ionen vorhanden sind, wird der überlaufende Katholyt teilweise oder vollständig zur Ammoniumchromalaun-Kristallisation gegeben. Man kann den Chrom(II)-Ionenhaltigen Katholyten auch zur Reduktion von organischen Verbindungen einsetzen. Solche Reduktionen sind beispielsweise in "J.R. Hanson und E. Premuzic, Zeitschrift für Angewandte Chemie, 80. Jahrgang 1968, Nr. 7, S. 271 bis 276" beschrieben.

Die in den Anodenräumen erzeugte Chromsäure-Lösung wird entnommen und teilweise oder gänzlich einer Verwertung als Chromsäure zugeführt, wobei diese Verwertung sowohl in Form der entnommenen Lösung wie auch in Form fester Chromsäure erfolgen kann. Zur Erzeugung der festen Chromsäure wird die Lösung im Regelfall eingedampft und die Chromsäure auskristallisieren gelassen. Vorzugsweise erfolgt die Kristallisation bei erhöhter Temperatur. Die nach der Kristallisation der Chromsäure verbleibende Mutterlauge, die noch gelöste Chromsäure enthält, kann wieder zur Auflösung von Chromhydroxid eingesetzt werden. Es ist selbstverständlich, daß maximal nur soviel Chromsäure dem Prozeß entnommen werden kann wie auch elektrolytisch erzeugt wird, für die Auflösung des Chromhydroxids muß stets ein nahezu konstanter Teil Chromsäure zur Verfügung stehen. Wird auch die für die Kathodenräume bestimmte Lösung durch Auflösung des Chromhydroxids in Chromsäure erzeugt, vermindert sich der insgesamt aus dem Prozeß abzugebende Anteil Chromsäure gegenüber der in den Anodenabteilen erzeugten Chromsäure-Menge um den durch Reduktion vernichteten Teil Chromsäure.

Um die Ansammlung von Verunreinigungen in den Anodenräumen zu vermindern, kann ein Teil der erzeugten Chromsäure-Lösung oder ein Teil der nach Kristallisation der Chromsäure verbleibenden Mutterlauge ausgeschleust oder aber einer Reinigung unterworfen werden. Eine Reinigung kann z.B. in der Art erfolgen, daß das Chrom(VI) reduziert wird, z.B. mit Schwefeldioxid gegebenenfalls unter Zusatz von Schwefelsäure, und die resultierende Lösung in die Ferrochrom-Auflösung oder in die nach Ferrochrom-Auflösung erhaltene Lösung zurückgeführt wird.

Besonders bevorzugt ist eine Verfahrensvariante, in der ein Teil der die Anodenräume verlassenden Chromsäure- und gegebenenfalls Schwefelsäure-haltigen Anolytlösung zum Lösen von Chromhydroxid verwendet wird, ein anderer Teil zu Chromsäurelösung und/oder Chromsäurekristallen aufgearbeitet wird und ein dritter Teil ausgeschleust und nach Reduktion mit Schwefeldioxid zum Lösen von Ferrochrom verwendet wird.

Bei hohen Reinheitsanforderungen wird der Anteil an auszuschleusender Anolytlösung so gewählt, daß der Gehalt an Fremdionen im Elektrolysekreislauf niedrig bleibt Dieser Anteil auszuschleusender Anolytlösung kann bis zu 10 % der Gesamtmenge an erzeugter Anolytlösung betragen, wodurch die Menge an isolierbarer Chromsäure entsprechend zurückgeht.

Zur Trennung von Anoden- und Kathodenräumen der Zellen können Diaphragmen, Anionenaustauscher- und Kationenaustauschermembranen verwendet werden. Vorzugsweise werden Kationenaustauschermembranen eingesetzt, die ein Perfluorkohlenstoff-Polymergerüst mit Sulfonat-Austauschgruppen aufweisen. Solche Membranen sind beispielsweise unter der Bezeichnung ®Nafion, Firma DuPont USA, im Handel. Geeignete Membranen sind beispielsweise ®Nafion 117, 324, 417, 423 und 430.

Als Elektrolysezellen werden vorzugsweise Rahmenzellen vom Typ Filterpresse eingesetzt. Wird auf der Kathodenseite Chrommetall erzeugt, sind diese Zellen vorzugsweise so konstruiert, daß die Kathodenplatten nach erfolgter Abscheidung von Chrommetall leicht aus der Zelle entfernt werden können. Als Konstrukionsmaterial für die Elektrolysezellen sind gegen Chromsäurelösung beständige Werkstoffe, insbesondere Titan, nachchloriertes PVC und PVDF geeignet.

Als Kathodenplatten können unterschiedliche Materialien wie Graphit, Blei, Kupfer, Nickel, Messing und deren Legierungen eingesetzt werden. Kathodenplatten aus Edelstahl sind bevorzugt.

Auf der Anodenseite werden vorzugsweise Elektroden mit einer elektrokatalytisch aktiven Schicht mit hoher Sauerstoffüberspannung eingesetzt. Dies können beispielsweise Elektroden aus Blei, Bleilegierungen oder verfestigtem Bleidioxid sein. Solche Anoden sind beispielsweise in der DE-A 2 619 426 beschrieben.

Besonders bevorzugt sind Elektroden aus einem Ventilmetall wie Titan, Niob oder Tantal, oder aus Graphit, die mit Bleidioxid beschichtet sind. Anoden dieser Art sind beispielsweise in der DE-A 2 714 605 und der US-A 4 236 978 beschrieben. Diese Anoden können zwischen Ventilmetall und Bleidioxid-Schicht eine leitfähige Zwischenschicht aufweisen. Diese Zwischenschicht kann aus einem oder mehreren Metalloxiden, wie beispielsweise Oxiden der Platinmetalle, Oxiden von Titan, Tantal, Vanadium und anderen Nichtedelmetallen oder auch aus naß- oder schmelzgalvanisch abgeschiedenen Edelmetallen, wie Platin und Iridium, bestehen.

Als Bauformen der Anoden kommen beispielsweise Plattenelektroden, Streckmetallanoden, Messeranoden, Spaghetti-Anoden und Jalousie-Anoden in Betracht.

In einer vorteilhaften Variante des Verfahrens werden Festbettanoden eingesetzt. Diese Festbettanoden können beispielsweise aus einer Bleikugel-, Titankugel- oder Titanschwammpartikel- oder Graphitpartikel-Schüttung oder einem porösen Titansintermetall bestehen, auf deren Oberfläche Bleidioxid abgeschieden wurde. Die Kugeln bzw. die Partikel weisen einen Durchmesser von 1 bis 10 mm, vorzugsweise von 2 bis 5 mm, auf. Durch diese Maßnahmne wird im Anodenraum der Zellen eine nahezu vollständige Oxidation von Chrom(III) zu Chromsäure bei hoher anodischer Stromausbeute und hoher Raum-Zeit-Ausbeute erreicht.

Die Elektrolysezellen werden im Temperaturbereich zwischen 25 und 85°C, vorzugsweise zwischen 50 bis 80°C, betrieben.

Die Elektrolysezellen sind mit Anolyt- und Katholytkreisläufen versehen, in denen die Elektrolyte rasch umgepumpt werden.

Diesen Kreisläufen wird frischer Elektrolyt, hergestellt durch Auflösen von Chromhydroxid in Schwefelsäure- und/oder Chromsäure-haltiger Lösung kontinuierlich zugegeben. Überlaufender chromsäurehaltiger Anolyt wird wie beschrieben, in den Prozeß zurückgeführt oder zu Chromsäurelösung und/oder zu Chromsäurekristallen aufgearbeitet. Der Katholytüberlauf wird in den Prozeß, vorzugsweise zur Ammoniumchromalaunkristallisation zurückgegeben, wobei eine teilweise oder vollständige Oxidation der Chrom(II)-Ionen zu Chrom(III)-Ionen durch Luftsauerstoff erfolgt.

Soll kathodisch Chrommetall erzeugt werden, wird zur Erzielung von hohen Chrommetallabscheidungsraten und hohen Stromausbeuten im Katholytkreislauf eine Chromgesamtkonzentration von 20 bis 60 g/l und ein PH-Wert von 1 bis 2,8, vorzugsweise von 2,1 bis 2,8, aufrechterhalten. Dies kann beispielsweise über die in den Katholytkreislauf gegebene Menge an frischem Elektrolyt und mit der darin enthaltenen Säuremenge, durch unabhängige Basen- oder Säuredosierung und durch Variation der kathodischen Stromdichte in vorgegebenen Grenzen geschehen. Im Anolytkreislauf kann die Chromgesamtkonzentration von 20 bis 700 g/l betragen.

Die Elektrolyse wird bei kathodischen Stromdichten von 0,3 bis 3 kA/m², vorzugsweise bei 0,3 bis 1,7 kA/m², betrieben. Bei Einsatz von Festbettanoden liegen die anodischen Stromdichten bei 1 bis 15 A/m², vorzugsweise 4 bis 8 A/m², der Anodenoberfläche.

Durch Anwendung des erfindungsgemäßen Verfahrens gelingt die Darstellung von Chromsäure ohne Zwangsanfall vom Chrom(VI)-haltigen Nebenprodukten.

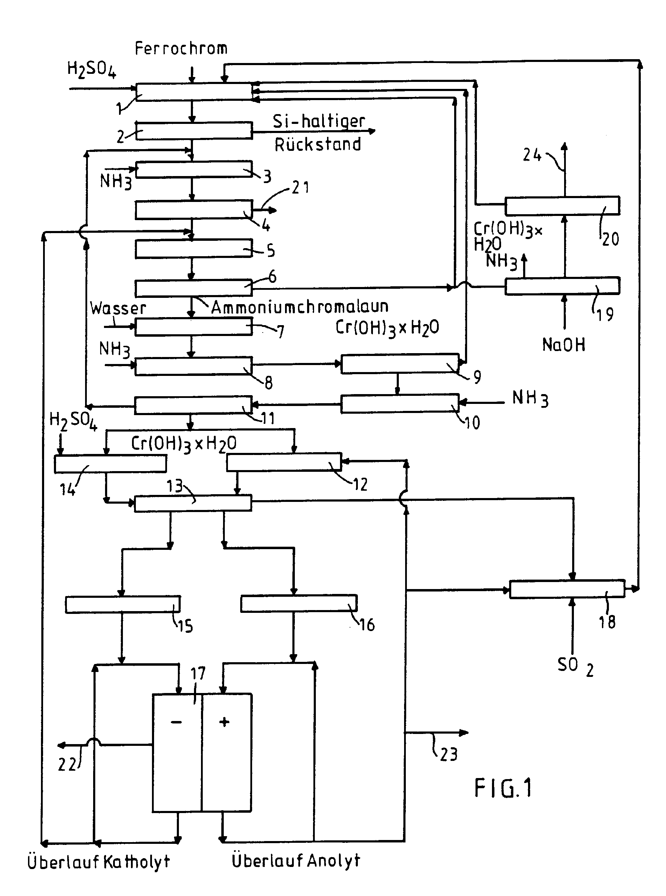

Das erfindungsgemäße Verfahren wird anhand Fig. 1 näher erläutert. Die in Fig. 1 beschriebene Verfahrensvariante stellt eine besonders vorteilhafte Ausführungsform dar.

Gemahlenes high carbon Ferrochrom wird mit konzentrierter Schwefelsäure, Mutterlauge aus der Ammoniumchromalaun-Kristallisation (5), (6) und gegebenenfalls mit ausgeschleustem und reduziertem Anolyt (18) und Katholyt-Überlauf in der Siedehitze gelöst (1). Die entstande Lösung wird durch Zugabe von kalter Mutterlauge aus Ammoniumeisensulfat-Aufarbeitung (21) auf ca. 80°C abgekühlt und durch Filtration von ungelöstem, siliciumhaltigen Rückstand befreit (2). Dieser Rückstand wird durch Waschen mit Wasser von lösbaren Bestandteilen befreit und geregelt entsorgt. Das Waschwasser wird in die Laugung (1) zurückgeführt. Dann wird die Hauptmenge an Eisen durch Kristallisation von Eisenammoniumsulfat aus der Lösung entfernt (3). Dazu wird die Lösung mit Ammoniakgas oder Ammoniaklösung und/oder Ammoniumsulfat versetzt und einige Stunden bei einer Temperatur von etwa 50°C bis 80°C gehalten, wobei die Reaktionszeit mindestens eine Stunde betragen sollte.

Durch rasches Abkühlen dieser Lösung auf 5 bis 10°C wird dann Ammoniumeisensulfat auskristallisiert und durch Filtration von der Lösung entfernt (4). Das chromhaltige Ammoniumeisensulfat wird durch Umkristallisieren weitestgehend vom Chrom befreit und einer technischen Verwertung zugeführt (21).

Die nunmehr von der Hauptmenge an Eisen befreite Lösung wird auf ca. 30°C erwärmt und längere Zeit bei dieser Temperatur gealtert (5). Das dabei auskristallisierende Ammoniumchromalaun wird filtriert und mit kaltem Wasser gewaschen (6). Ein Teil der Mutterlauge und des Waschwassers werden in die Laugung (1) zurückgeführt und ein anderer Teil wird ausgeschleust. Der ausgeschleuste Teil wird mit Natronlauge und/oder Natriumcarbonat versetzt, wobei Chromhydroxid nahezu vollständig ausfällt (19), das durch Filtration (20) von der ammoniakhaltigen Natriumsulfatlösung abgetrennt und in die Laugung (1) zurückgeführt wird. Die ammoniakhaltige Natriumsulfatlösung wird durch Strippen von Ammoniak befreit und zu kristallinem Natriumsulfat aufgearbeitet (24), das einer technischen Verwertung zugeführt wird. Der dabei anfallende Ammoniak wird bei der Kristallisation (3) und/oder bei den Fällungen (8) und (10) eingesetzt.

Die gewaschenen Ammoniumchromalaun-Kristalle werden anschließend in heißem Wasser gelöst (7) und der zweistufigen Chromhydroxidfällung zugeführt Hier wird die auf 60 bis 90°C erwärmte Lösung so lange mit Ammoniaklösung oder -gas versetzt, bis sich in der Lösung ein pH-Wert von ca. 3,0 bis 4,0 einstellt (8). Das dabei ausfallende Chromhydroxid wird abgetrennt (9) und in die Laugung (1) zurückgeführt. Es ist vorteilhaft, der Ammoniumchromalaunlösung vor der Chromhydroxidfällung (8) eine kleine Menge an Oxidationsmittel, vorzugsweise Chromsäure-haltiger Anolyt, zuzusetzen.

Durch Versetzen mit weiterem Ammoniak wird danach Chromhydroxid bei 60 bis 90°C, vorzugsweise 80°C, und einem pH-Wert von 4,5 bis 6,0, vorzugsweise 5, ausgefällt (10), filtriert (11) und gewaschen. Das anfallende Filtrat und Waschwasser wird in den Prozeß, beispielsweise vor die Kristallisation (3) und/oder in die Fällung (19), zurückgeführt.

Zur Bereitung der Lösung für die Anolytvorlage (16) wird anschließend abgetrenntes wasserhaltiges Chromhydroxid in chromsäurehaltiger Anolytlösung und/oder Mutterlauge aus der Chromsäure-Aufarbeitung (23) gelöst (12) und gegebenenfalls durch Filtration (13) von ungelösten Bestandteilen befreit. Der Rückstand der Filtration (13) wird über die Reduktion (18) in die Laugung (1) zurückgeführt.

Zur Bereitung der Lösung für die Katholytvorlage (15) wird abgetrenntes, wasserhaltiges Chromhydroxid in Schwefelsäure gelöst (14) und gegebenenfalls durch Filtration (13) von ungelösten Bestandteilen befreit.

Nach Einstellen der für den Elektrolyseprozeß optimalen Konzentrationen durch Zugabe oder Verdampfen von Wasser und der pH-Werte durch Zugabe von Chromhydroxid und/oder Schwefelsäure und/oder chromsäurehaltiger Anolytlösung werden die Elektrolyte über die Anolytvorlage (16) und gegebenenfalls nach Reduktion mit Schwefeldioxid unter Zusatz von Schwefelsäure über die Katholytvorlage (15) den Anolyt- und Katholytkreisläufen der Zellen zugeführt.

Die Elektrolyse (17) wird nun so betrieben, daß sich im Katholytkreislauf eine Chromgesamtkonzentration von 10 bis 100 g/l und pH-Werte unter 1 einstellen. Dies geschieht über die Dosierung der Menge an Elektrolyt aus der Vorlage (15) und über die kathodische Stromdichte im Bereich von 0,05 bis 0,8 kA/m² oder durch Zugabe von Schwefelsäure. Die Elektrolysetemperatur von 50 bis 80°C, besonders bevorzugt ca. 60°C, wird über Wärmetauscher in dem Anolyt- und Katholytkreislauf geregelt. Der Überlauf des Katholytkreislaufes wird in den Prozeß in die Alterung (5) zurückgeführt. Gegebenenfalls abgeschiedenes metallisches Chrom wird in die Laugung (1) gegeben.

Bei gleichzeitiger Erzeugung von Chromsäure und Chrommetall wird die Elektrolyse so ausgeführt, daß sich im Katholytkreislauf pH-Werte von 2,1 bis 2,8 und Chromgesamtkonzentrationen von 20 bis 60 g/l einstellen. Diese pH-Werte werden durch Zugabe von Ammoniak oder einer anderen Base eingestellt. Die kathodische Stromdichte wird auf Werte zwischen 0,3 bis 1,7 kA/m² und die Elektrolysetemperatur auf einen Wert zwischen 50 bis 80°C, vorzugsweise 60°C, eingestellt. Zur Erzielung von hohen kathodischen Stromausbeuten wird der Katholytkreislauf unter Ausschluß von Luftsauerstoff, beispielsweise durch Überlagerung mit Stickstoff, betrieben.

Nach einer Elektrolysezeit von ca. 50 bis 100 Stunden werden die mit abgeschiedenem Chrommetall belegten Kathodenbleche aus den Zellen entfernt und von Chrommetall befreit. Das erhaltene Chrommetall wird dann nach bekannten Verfahren zum Verkaufsprodukt aufgearbeitet (22).

Der Überlauf des chromsäurehaltigen Anolytkreislaufes wird zum Lösen von Chromhydroxid (12) und zur Herstellung von Chromsäurelösung und Chromsäurekristallen eingesetzt (23). Um eine Anreicherung von Verunreinigungen in dem Anolytkreislauf zu vermeiden, wird ein Teil der Anolytlösung nach Reduktion mit Schwefeldioxid (18) in die Laugung (1) zurückgeführt.

Zur Herstellung von Chromsäurelösung wird die Anolytlösung, gegebenenfalls nach Oxidation von Chrom(III)-Resten mittels Peroxidsulfaten, durch Eindampfen oder Zugabe von Wasser auf ca. 50% CrO₃ eingestellt.

Verkaufsfähige Chromsäurekristalle werden aus dieser Lösung durch Verdampfen von Wasser im Vakuum, Zentrifugieren und Waschen mit Wasser und Trocknen gewonnen. Die beim Zentrifugieren erhaltene Mutterlauge und die Waschlösung werden nach der Reduktion (18) zur Laugung (1) und/oder ohne vorherige Reduktion mit Schwefeldioxid zum Lösen von Chromhydroxid (12) eingesetzt.

## Patentansprüche

1. Verfahren zur Erzeugung von Chromsäure durch Elektrolyse von in Säure gelöstem, aus Ferrochrom über Ammoniumchromalaun gewonnenem Chromhydroxid, wobei
a) Ferrochrom in Schwefelsäure und Mutterlauge aus der Ammoniumchromalaunkristallisation, gegebenenfalls unter Zusatz von Katholyt- und/oder Anolyt-Überlauf aus der Elektrolyse, gelöst wird,
b) ungelöste Bestandteile durch Filtration entfernt werden
c) gelöstes Eisen durch Zusatz von Ammoniak und/oder Ammoniumsulfat zum erhaltenen Filtrat, Kristallisation von Eisenammoniumsulfat und Filtration, entfernt wird,
d) Ammoniumchromalaun aus der verbleibenden Lösung kristallisiert und filtriert wird und das Filtrat zum Lösen von Ferrochrom zurückgeführt wird,
e) das Ammoniumchromalaun in Wasser gelöst wird,
f) Chrom(III)hydroxid aus der entstandenen Lösung mittels Base, gegebenenfalls unter reduzierenden Bedingungen gefällt und abgetrennt wird,
g) das Chromhydroxid in Säure gelöst wird,
h) ungelöste Anteile aus der Lösung abgetrennt werden, und
i) das in Säure gelöste Chromhydroxid in durch Membranen in Anodenraum und Kathodenraum geteilte Elektrolysezellen eingeleitet wird, wobei im Anodenraum Chromsäure erzeugt und im Kathodenraum Wasserstoff und Chrommetall abgeschieden und/oder Chrom(II)-Ionen erzeugt werden,
dadurch gekennzeichnet, daß
in Stufe g) entweder eine einheitliche Lösung des Chromhydroxids in Chromsäure erzeugt wird, oder zwei getrennte Lösungen, davon eine in Chromsäure und eine in Schwefelsäure erzeugt werden, wobei die Lösung in Chromsäure als Anolyt und entweder dieselbe Lösung oder die Lösung in Schwefelsäure des Katholyt eingesetzt werden.

2. Verfahren gemäß Anspruch 1, dadurch gekennzeichnet, daß die Fällung von Chromhydroxid mittels Ammoniak in zwei Schritten erfolgt, wobei im ersten Schritt verunreinigtes Chromhydroxid gefällt wird, das nach Abtrennung dem Lösen von Ferrochrom zugeführt wird und nur im zweiten Schritt gefalltes und abgetrenntes, gegebenenfalls gewaschenes, Chromhydroxid mit Schwefelsäure- und/oder Chromsäure-haltiger Lösung aufgelöst und zur elektrolytischen Erzeugung von Chromsäure und Chrommetall verwendet wird.

3. Verfahren gemäß Anspruch 1 oder 2, dadurch gekennzeichnet, daß als Base Ammoniak, Natriumhydroxid, Natriumcarbonat und/oder ihre wäßrige Lösung eingesetzt wird.

4. Verfahren gemäß einem oder mehreren der Ansprüche 1 bis 3, durch gekennzeichnet, daß ein Teil der die Zellen verlassenden Chromsäurehaltigen und gegebenenfalls Schwefelsäure-haltigen Elektrolytlösung zum Lösen von Chromhydroxid verwendet wird, ein anderer Teil zu Chromsäurelösung und/oder Chromsäurekristallisation aufgearbeitet wird und ein dritter Teil nach Redeuktion mit Schwefeldioxid zum Lösen von Ferrochrom verwendet wird.

5. Verfahren gemäß einem oder mehreren der Ansprüche 1 bis 4, dadurch gekennzeichnet, daß perfluorierte Kationenaustauschermembranen mit Sulfonataustauschergruppen zur Trennung von Anoden- und Kathodenräumen oder Zellen verwendet werden.,

## Claims

1. Process for the production of chromic acid by the electrolysis of chromium hydroxide obtained from ferrochrome via ammonium chrome alum and dissolved in acid,
a) ferrochrome being dissolved in sulphuric acid and mother liquor from the crystallization of ammonium chrome alum, optionally with the addition of catholyte and/or anolyte overflow from the electrolysis,
b) undissolved constituents being removed by filtration,
c) dissolved iron being removed by the addition of ammonia and/or ammonium sulphate to the filtrate obtained, crystallization of iron ammonium sulphate and filtration,
d) ammonium chrome alum being crystallised from the remaining solution and filtered and the filtrate being returned for dissolving ferrochrome,
e) the ammonium chrome alum being dissolved in water,
f) chromium(III) hydroxide being precipitated from the resulting solution by means of a base, optionally under reducing conditions, and separated,
g) the chromium hydroxide being dissolved in acid,
h) undissolved components being removed from the solution and
i) the chromium hydroxide dissolved in acid being introduced into electrolytic cells which are partitioned into anode chamber and cathode chamber by membranes, chromic acid being produced in the anode chamber and hydrogen and metallic chromium being deposited and/or chromium(II) ions being produced in the cathode chamber,
characterized in that
in stage g) either a uniform solution of the chromium hydroxide in chromic acid is produced or two separate solutions are produced, one in chromic acid and one in sulphuric acid, the solution in chromic acid being used as anolyte and either the same solution or the solution in sulphuric acid being used as catholyte.

2. Process according to Claim 1, characterized in that the precipitation of chromium hydroxide with ammonia is carried out in two stages, contaminated chromium hydroxide being precipitated in the first stage and transferred, after its separation, to the stage of dissolving ferrochrome, and precipitated and separated, optionally washed chromium hydroxide being dissolved only in the second stage with solution containing sulphuric acid and/or chromic acid and used for the electrolytic production of chromic acid and metallic chromium.

3. Process according to Claim 1 or Claim 2, characterized in that the base used is ammonia, sodium hydroxide, sodium carbonate and/or an aqueous solution thereof.

4. Process according to one or more of Claims 1 to 3, characterized in that part of the electrolyte solution leaving the cells, which solution contains chromic acid and optionally sulphuric acid, is used for dissolving chromium hydroxide, another part is worked up for the production of chromic acid solution and/or the crystallisation of chromic acid and a third part is used for dissolving ferrochrome after its reduction with sulphur dioxide.

5. Process according to one or more of Claims 1 to 4, characterized in that perfluorinated cation exchanger membranes containing sulphonate exchanger groups are used for the separation of anode and cathode chambers or cells.

## Revendications

1. Procédé de production d'acide chromique par électrolyse d'hydroxyde de chrome dissous dans un acide, obtenu à partir de ferrochrome en passant par un alun de chrome et d'ammonium, dans lequel
a) du ferrochrome est dissous dans l'acide sulfurique et dans la liqueur-mère provenant de la cristallisation de l'alun de chrome et d'ammonium, le cas échéant avec addition du trop-plein de catholyte et/ou d'anolyte de l'électrolyse,
b) les constituants non dissous sont enlevés par filtration,
c) le fer dissous est éliminé par addition d'ammoniac et/ou de sulfate d'ammonium au filtrat obtenu, cristallisation du sulfate de fer et d'ammonium et filtration,
d) l'alun de chrome et d'ammonium est cristallisé dans la solution restante et il est filtré, et le filtrat est recyclé pour la dissolution de ferrochrome,
e) l'alun de chrome et d'ammonium est dissous dans l'eau,
f) l'hydroxyde de chrome (III) est précipité dans la solution produite au moyen d'une base, le cas échéant dans des conditions réductrices et il est séparé,
g) l'hydroxyde de chrome est dissous dans un acide,
h) les constituants non dissous sont séparés de la solution et
i) l'hydroxyde de chrome dissous dans l'acide est introduit dans des cellules d'électrolyse divisées par des membranes en un compartiment anodique et un compartiment cathodique, en sorte que de l'acide chromique est produit dans le compartiment anodique et que, dans le compartiment cathodique, de l'hydrogène et du chrome métallique sont séparés et/ou des ions chrome (II) sont produits,
caractérisé en ce que dans l'étape g), il est produit une solution homogène d'hydroxyde de chrome dans de l'acide chromique, ou bien il est produit deux solutions séparées, l'une dans l'acide chromique et l'autre dans l'acide sulfurique, la solution dans l'acide chromique étant utilisée comme anolyte et la même solution ou la solution dans l'acide sulfurique étant utilisée comme catholyte.

2. Procédé suivant la revendication 1, caractérisé en ce que la précipitation d'hydroxyde de chrome au moyen d'ammoniac est effectuée en deux étapes dans la première desquelles est formé un précipité d'hydroxyde de chrome contenant des impuretés, qui est envoyé après séparation à la dissolution de ferrochrome et ce n'est que dans la seconde étape que l'hydroxyde de chrome précipité et séparé, éventuellement lavé, est dissous avec une solution contenant de l'acide sulfurique et/ou de l'acide chromique et utilisé pour la production électrolytique d'acide chromique et de chrome métallique.

3. Procédé suivant la revendication 1 ou 2, caractérisé en ce qu'on utilise comme base l'ammoniac, l'hydroxyde de sodium, le carbonate de sodium et/ou leur solution aqueuse.

4. Procédé suivant une ou plusieurs des revendications 1 à 3, caractérisé en ce qu'une partie de la solution électrolytique sortant des cellules, contenant de l'acide chromique et contenant éventuellement de l'acide sulfurique est utilisée pour la dissolution d'hydroxyde de chrome, une autre partie est traitée pour obtenir une solution d'acide chromique et/ou pour la cristallisation d'acide chromique et une troisième partie est utilisée après réduction à l'anhydride sulfureux pour la dissolution de ferrochrome.

5. Procédé suivant une ou plusieurs des revendications 1 à 4, caractérisé en ce qu'on utilise des membranes d'échangeurs cationiques perfluorés comportant des groupes échangeurs sulfonate pour la séparation des compartiments anodiques et cathodiques ou des cellules.
